# EUROPEAN PATENT APPLICATION

(11) **EP 1 912 401 A1**
(43) Date of publication of application: **16.04.2008**
(21) Application number: 06255208.8
(22) Date of filing: 10.10.2006
(51) Int. Cl.: H04L 29/06

(54) **Wireless access hub**

(71) Applicant: British Telecommunications Public Limited Company, London EC1A 7AJ (GB)
(72) Inventor: Lee, John Charles, Suffolk, IP21 5DX (GB)
(74) Representative: Lidbetter, Timothy Guy Edwin

(57) **Abstract**

A wireless hub 7 has an interface 73 capable of wireless connection to several terminals 10, 11, 12, and is connected to the internet 8. hub, to allow internet connection to be made by the terminals. The hub 7 has two different access modes, depending on the identity of the individual terminal 10, 11, 12. When a terminal attempts to communicate with the hub 7, the interface 71 interrogates it for a user identity. If the identity matches one in a resident list 72 stored by the hub, it allows full access using a "resident" mode: otherwise it allows more limited access using a "public" mode. Such limitations may include a bar on subscription services, or access through a firewall. Residents may have priority over non-residents (or vice versa) for allocation of available bandwidth. Communication between terminals attached to the same hub is normally made by way of the internet 8, the hub 7 acting as both source and destination node in this case. However, communication between residents of the same hub (and optionally also between two non-resident terminals) may be made directly through the hub 7.

## Description

This invention relates to computing hubs of the kind used for allowing individual computing apparatus to communicate with each other, and also with external networks. Typically a hub is connected to a fixed-line internet connection, with means for establishing communication with a number of computing devices using a wireless protocol such as the IEEE 802.11 standard, although many such hubs also include provision for one or more devices to be connected by a fixed connection. Such facilities are commonly used to interconnect devices within one building (for example two desktop computers and a printer), or to allow several such devices to share an internet connection. The wireless facility also allows Internet access to be provided for portable devices such as laptop computers, without the need for a physical connection.

When a wireless device is to be connected to a hub for the first time, it scans the wireless spectrum to identify which hub or hubs are within range, and attempts to connect to one of them - usually the one with the best signal. However, because wireless transmissions are capable of being detected by any compatible devices within range, it would be possible for a user to access a hub without the knowledge of the owner of that hub. This may compromise the security of the owner's own information, or limit the bandwidth available to the owner, and so security measures may have to be applied to prevent such unauthorised access. In other circumstances, a hub (wireless or otherwise) may be provided for public access, but only on payment of a fee, and so access control measures have to be applied to ensure that access is only possible after authorisation has been granted.

A user may, however, wish to make his hub available for use by a visitor's terminal. This can be readily achieved if there are no access controls on the hub, simply by having the terminal search for the nearest operational hub. If access controls are in place, the terminal must be given the necessary authorisation information to allow it to establish wireless communication. In either case the terminal becomes part of the wireless network of terminals interconnected through the hub. This means that any data held on, or transmitted between, the host user's own terminals is potentially available to the visitor's terminal as well. This may be undesirable - whether in a home or business environment there may be data that the host would not wish the visitor to have access to. The provision of a separate hub, and associated internet connection, solely for the benefit of occasional visitors, would be expensive.

The present invention overcomes this problem by providing a hub having two or more classes of access. In one embodiment, any terminal may access the hub using a first (public) part, but only specified terminals, hereinafter referred to as "resident", have access to a second class. This second class of access may include such features as a "firewall", to prevent inadvertent access of confidential data by non-resident users of the hub who do not have authority to do so.

Preferably, the specified resident terminals are prevented from accessing the public part of the hub, to ensure that users of resident terminals do not inadvertently use the public part and, in consequence, make data available to a non-resident terminal. However, some terminals (for example peripherals such as printers) may be made available to both resident and non-resident terminals.

With this arrangement, resident and non-resident terminals may still communicate with each other, but they would have to do so through the internet. The public part of the wireless hub may be configured to allow two or more non-resident terminals connected to it to communicate with each other directly through the hub, to allow two visitors' terminals to co-operate without using the internet connection, so that they can exchange data using the wireless hub. Alternatively, it may instead be configured to prevent this, for example if individual visitors need to keep their data private from each other (as well as their host).

One part may be arranged so as to have precedence over the other: for example a maximum bit rate may be imposed, or one part may be limited such that it may only use bandwidth not currently required by the other part. Thus, for example, it may be arranged that non-residents can only use capacity not required by the resident user, or vice versa. Other limitations may be imposed, for example to prevent non-residents using subscription services for which the resident would be liable for the cost.

Two or more different access modes may be made available for different resident categories, in which case non-resident terminals may have a third access mode, but the scope of the appended claims extends to an arrangement in which the node is simply partitioned between two or more categories of resident, with no public access.

An embodiment of the invention will now be described, by way of example, with reference to the drawings, in which
Figure 1 is a schematic depiction of a wireless access hub operating according to the invention, together with the various elements with which it interworks
Figure 2 is a flow diagram illustrating how the hub responds to an attempt by a terminal to effect connection with the hub
Figure 3 is a flow diagram illustrating how the hub responds to an attempt to transmit data to a terminal registered with the hub
Figures 4 and 5 show two alternative processes by which connections may be made between terminals connected to the hub

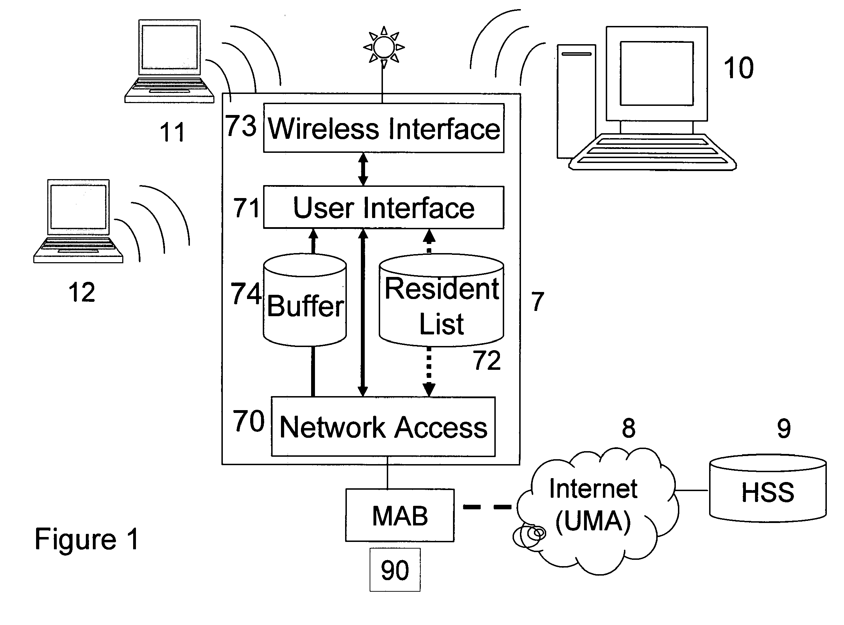

In Figure 1 there is shown a wireless hub 7, having a wireless interface 73, capable of connection to several terminals 10, 11, 12 using a wireless protocol such as IEEE 802.11. The wireless interface 73 is connected to a user interface 71. The hub 7 has a network access control system 70 connected through an internet connection to a mobile access bridge 90 which allows communication with the internet 8. A register 9 is associated with the mobile access bridge 90, which records the current IP address of any terminal currently associated with the hub, to allow connection to be made to such terminals.

According to the present invention, the wireless hub 7 has two different access modes, depending on the identity of the individual terminal 10, 11, 12.

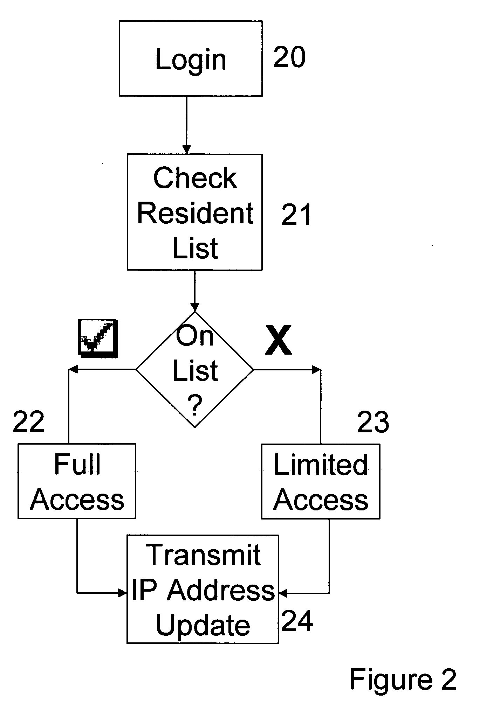

As is illustrated in Figure 2, when a terminal 10, 11, 12 attempts to communicate with the hub 7, the interface 71 interrogates it for its user identity (step 20), and checks it against the terminal identities stored in the resident list 72 (step 21). If the identity matches one in the list 72 stored by the hub, it allows full access using the resident mode (step 22): otherwise it allows more limited access using the public mode (step 23). In either case, the user identity and hub identity are passed by way of the network interface 70 (step 24) on to the mobile access bridge 90 and thus, by way of the internet 8, to be recorded in the network register 9.

The network register 9 records the locations of user terminals, such that data directed to a given terminal can be routed to the correct hub, such as the hub 7 shown in Figure 1.

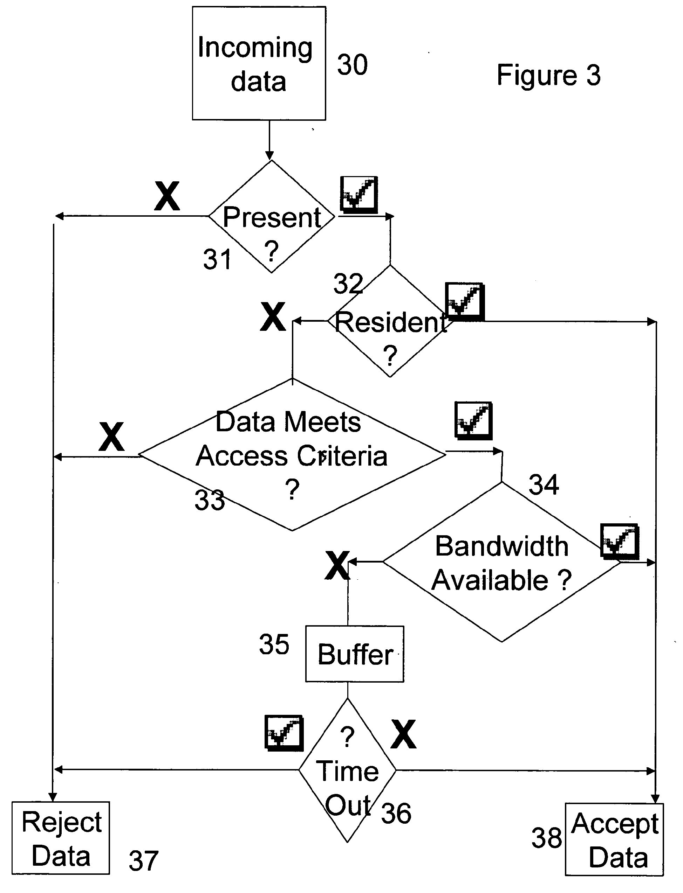

As shown in Figure 3, the network access system 70 of the hub 7 identifies the terminal 10, 11, 12 to which incoming data (30) is directed. It checks this terminal identity against the user interface 71 to check whether the terminal is indeed present (step 31). If the destination terminal has disconnected from the hub since it was last recorded in the register 9, an error message is returned to the register 9. (In case the disconnection is temporary, the network may make further attempts to transmit the data, until either a timeout occurs, or the terminal registers with another hub elsewhere.)

If the required user terminal 10, 11, 12 is logged on to the hub 7, the access control system 70 next determines (step 32) whether the terminal is on the resident list 72. The subsequent handling of the data depends on the outcome of this enquiry. In the present embodiment, data destined for non-resident terminals is only accepted if it meets certain access criteria. For example, resident terminals may have greater access rights to accept subscription or encrypted data, using a firewall system, or may have precedence if there is insufficient bandwidth for all users requiring use of the hub 7. Thus, if the data destined for a non-resident terminal fails to meet the access criteria (step 33) it is rejected. The terminal 11 is sent an indication to this effect. If resident terminals have priority for bandwidth, and there is insufficient bandwidth available to support the required information stream without affecting the requirements of the resident terminal 10 (step 34) again the data is rejected. The bandwidth criterion may be dynamic, based on actual current usage, or there may be a fixed proportion of the total bandwidth which is made available to non-resident terminals. The rejected incoming data may be stored (step 35) in a buffer 74 for one or more further transmission attempts, and only rejected (step 37) if the transmission fails to be achieved within a predetermined time (step 36).

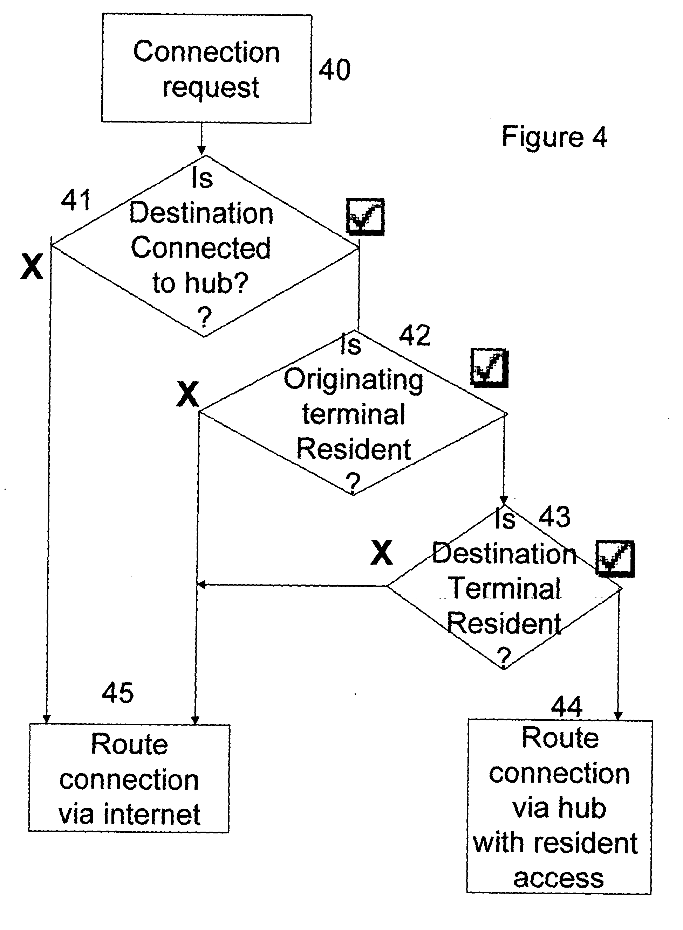

Figure 4 is a flow diagram indicating how two terminals, both connected to the hub, may be brought into communication. When a connection request is received by the hub (step 40) from a first terminal 11, the user interface 71 first checks whether the destination terminal is currently in communication with the hub (step 41). If it is not so connected, connection must be made using the internet 8 (step 45) even if the destination terminal is recorded in the register 72 as normally resident with the hub.

If the destination terminal 12 is currently connected to the hub, the user interface accesses the resident list 72 (steps 42, 43) to determine whether the originating terminal and destination terminal both have resident permissions. If they do both have such permissions, connection can be made directly between them using the hub (step 44), allowing the use of the full facilities available to residents. However, if either terminal is not on the resident list, the connection request is routed through the mobile access bridge 90 and the internet 8 (step 45), using the location data recorded in the register 9 to determine where the destination terminal is located. In the present example, the destination terminal is connected to the same hub as the originating terminal, so the connection request is returned to the hub 7, where connection can be made as already described with reference to Figure 3.

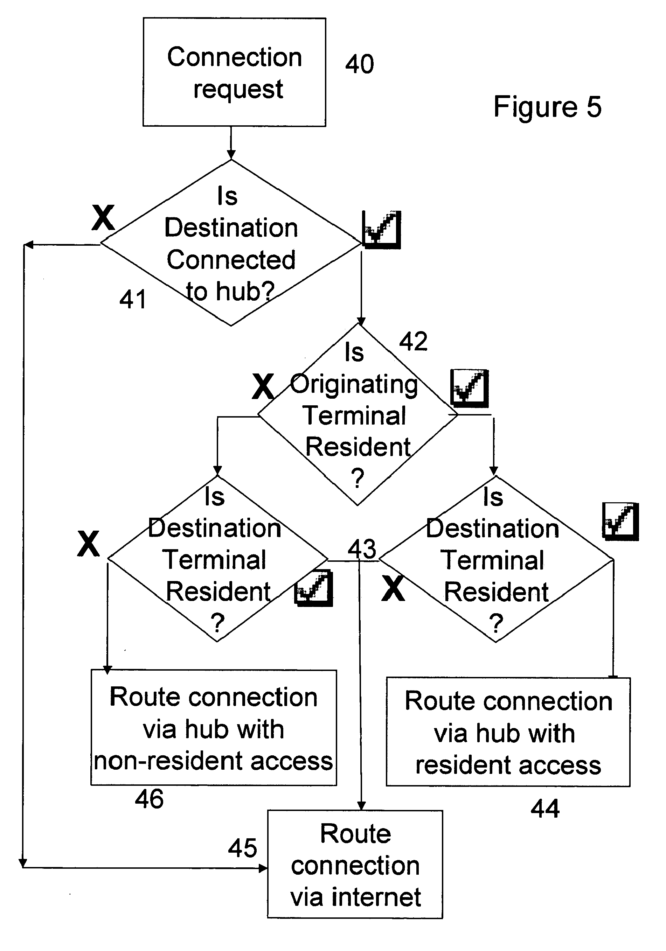

Figure 5 illustrates an alternative flow diagram in which the hub may be used to connect two resident terminals (step 44), or two non-resident terminals (step 46), but not one of each type. The difference between Figure 4 and Figure 5 is that when the user interface accesses the resident list 72 (steps 42, 43) to determine whether the originating terminal and destination terminal both have resident permissions, connection can be also made between two such terminals by way of the hub if neither of them has resident access. However, if one of the terminals is on the resident list, and the other is not, the connection request is again routed through the mobile access bridge 90 and the internet 8 (step 45), using the location data recorded in the register 9 to determine where the destination terminal is located. Effectively, the hub 7 operates as two independent virtual hubs, namely a resident hub and a non-resident hub, through each of which terminals may be interconnected, but only if they are both of the same category. Connection between terminals of different categories requires connection of the two virtual hubs through the internet 8 (step 45).

The embodiments that have been described have hubs that each provide for only one category of resident. More than one such category of resident may be provided for, with different levels of permissions for connection within and between these different categories. The "non-resident" category then covers any terminal not listed as resident in any of the other categories. Where two different access modes are available for different resident categories, non-resident terminals may have a third access mode, but the scope of the appended claims extends to an arrangement in which the node 7 is simply partitioned between two categories of resident, and non-residents do not have access at all.

## Claims

1. A computing hub having means for connection of a plurality of individual computing apparatus to each other, and with external networks, having means for controlling access to the hub by computing apparatus such that a first predetermined category of terminal has access to facilities provided by the hub that are not available to a second category of terminal.

2. A computing hub according to claim 1, wherein the access control means has means for allowing access to a first class of facility to terminals requesting access, means for identifying whether a terminal attempting access falls within a specified category, and means for allowing a terminal so identified to also have access to a second class of facility.

3. A computing hub according to claim 2, wherein terminals permitted access to the second class of facility are prevented from interacting directly through the hub with terminals that are denied such access.

4. A computing hub according to claim 3, configured such that terminals not permitted access to the second class of facility are prevented from interacting directly through the hub with each other.

5. A computing hub according to claim 3, configured such that terminals permitted access to the same class of facility may interact directly through the hub with each other.

6. A computing hub according to any preceding claim, configured such that terminals in one of the predetermined categories are given precedence over other terminals in provision of facilities available from the hub.

7. A computing hub according to claim 6, wherein different maximum bit rates are imposed on terminals in different categories.

8. A computing hub according to claim 6, arranged such that terminals in one of the categories can only use bandwidth not currently required by terminals in the other category.

9. A computing hub according to claim 6, 7, or 8, wherein terminals in one category are prevented from accessing subscription services available to terminals in another category.

10. A method of connecting a plurality of individual computing apparatus to each other, and with external networks, through a computing hub, wherein a first predetermined category of terminal has access to facilities provided by the hub that are not available to a second category of terminal.

11. A method according to claim 10, wherein access to a first class of facility is allowed to terminals requesting access, and access to a second class of facility is only allowed for terminals falling within a specified category.

12. A method according to claim 11, wherein terminals permitted access to the second class of facility are prevented from interacting directly through the hub with terminals that are denied such access.

13. A method according to claim 12, wherein terminals not permitted access to the second class of facility are prevented from interacting directly through the hub with each other.

14. A method according to claim 12, wherein terminals permitted access to the same class of facility may interact directly through the hub with each other.

15. A method according to any of claims 10 to 14, wherein terminals in one of the predetermined categories are given precedence over other terminals in provision of facilities available from the hub.

16. A method according to claim 15, wherein different maximum bit rates are imposed on terminals in different categories.

17. A method according to claim 15, wherein terminals in one category can only use bandwidth not currently required by terminals in another category.

18. A method according to claim 15, 16, or 17, wherein terminals in one category are prevented from accessing subscription services available to terminals in another category.
